(19) Europäisches Patentamt
European Patent Office
Office européen des brevets

(11) **EP 4 576 258 A1**

(12) **EUROPEAN PATENT APPLICATION**
published in accordance with Art. 153(4) EPC

(43) Date of publication:
**25.06.2025 Bulletin 2025/26**

(21) Application number: **23880206.0**

(22) Date of filing: **18.10.2023**

(51) International Patent Classification (IPC):
***H01M 4/505** (2010.01)* ***H01M 4/525** (2010.01)*
***H01M 4/131** (2010.01)* ***H01M 10/0525** (2010.01)*
***H01M 4/02** (2006.01)*

(52) Cooperative Patent Classification (CPC):
**H01M 4/02; H01M 4/131; H01M 4/505; H01M 4/525; H01M 10/052; H01M 10/0525;** Y02E 60/10

(86) International application number:
**PCT/KR2023/016101**

(87) International publication number:
**WO 2024/085629 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022 KR 20220134434**

(71) Applicant: **LG Energy Solution, Ltd.**
**Seoul 07335 (KR)**

(72) Inventors:
- **KIM, Gun Woo**
  **Daejeon 34122 (KR)**
- **HUR, Hyuck**
  **Daejeon 34122 (KR)**
- **PARK, Kang Joon**
  **Daejeon 34122 (KR)**
- **KIM, Dong Hwi**
  **Daejeon 34122 (KR)**
- **PARK, Sin Young**
  **Daejeon 34122 (KR)**
- **PARK, Byung Chun**
  **Daejeon 34122 (KR)**
- **HAN, Gi Beom**
  **Daejeon 34122 (KR)**
- **LEE, You Shin**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE AND LITHIUM SECONDARY BATTERY INCLUDING SAME**

(57) The present invention pertains to a positive electrode and a lithium secondary battery including same, the positive electrode including a lithium-excess manganese-based oxide in which the molar ratio (Li/Me) of lithium to all metals excluding lithium exceeds 1.1, the content of manganese among all the metals excluding lithium is at least 50 mol%, and expression (1) below is satisfied. Expression (1): $0.05 < I_{TM}/I_{Li} < 0.13$. In expression (1), $I_{TM}$ and $I_{Li}$ are, respectively, the sum of the areas of peaks appearing in the 1000-2500 ppm region and the sum of the areas of peaks appearing in the 300-900 ppm region when peak deconvolution is performed on the 1D NMR center band spectrum extracted from the 2D $^7Li$ Magic Angle Turning Phase Adjusted Spinning Sideband (MATPASS) NMR spectrum of the lithium-excess manganese-based oxide.

[FIG. 1]

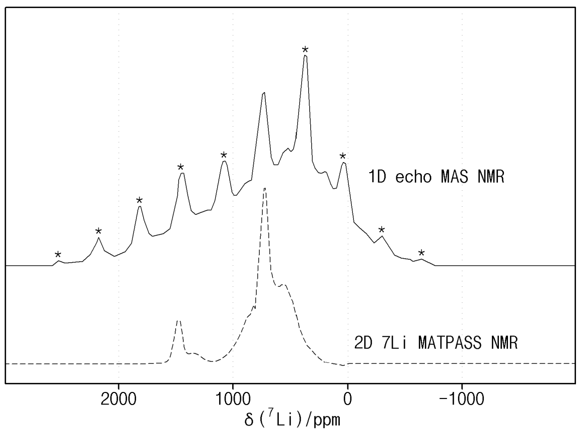


EP 4 576 258 A1

## Description

### TECHNICAL FIELD

This application claims priority from Korean Patent Application No. 10-2022-0134434, filed on October 18, 2022, the disclosure of which is incorporated by reference herein.

The present invention relates to a positive electrode and a lithium secondary battery, and more particularly, to a positive electrode including an overlithiated manganese-based oxide as a positive electrode active material and having excellent life characteristics and a lithium secondary battery including the same.

### BACKGROUND ART

Recently, interests in energy storage technologies have been increasingly grown, and efforts for research and development of electrochemical devices have been gradually materialized as the application of the energy storage technologies is expanded to the energy of mobile phones, camcorders, notebook PCs, and even to electric vehicles. There emerges an interest in rechargeable secondary batteries among these electrochemical devices, and, particularly, lithium secondary batteries developed in the early 1990's are spotlighted because the lithium secondary batteries are advantageous in that they have higher operating voltage and significantly higher energy density.

Recently, demand for a high-capacity positive electrode active material is increasing as demand for secondary batteries with high energy density, such as batteries for electric vehicles, has increased. In order to increase the capacity of the positive electrode active material, typically, development of a high-nickel positive electrode active material, in which a nickel content is increased in a ternary lithium composite transition metal oxide containing nickel, cobalt, and manganese (hereinafter, referred to as NCM),has mainly been conducted. However, with respect to the high-nickel positive electrode active material, there is a limitation in reducing a unit price due to high price of raw materials such as nickel and cobalt, and problems, such as structural collapse of the positive electrode active material at high temperature and high voltage, transition metal dissolution, and gas generation, have occurred due to low structural stability.

Accordingly, development of a positive electrode for a lithium secondary battery, which uses an overlithiated manganese-based oxide capable of achieving high capacity while containing lower amounts of expensive metals than the NCM, has been actively conducted in recent years. The overlithiated manganese-based oxide is a material which has a molar ratio of lithium to transition metals of greater than 1 and has an amount of manganese among the transition metals of 50 mol% or more, wherein it has a structure in which a $Li_2MnO_3$phase with a rock salt structure and a $LiMO_2$ phase (where M is nickel (Ni), cobalt (Co), and manganese (Mn))with a layered structure are mixed. Since the overlithiated manganese-based oxide achieves capacity through transition metal oxidation similar to the conventional NCM in a low voltage range and achieves capacity through oxygen redox in a high voltage range, higher capacity than that of the conventional high-nickel NCM may be achieved. However, since an excessive amount of active oxygen is generated during the oxygen redox, there is a problem in that cell lifetime is low.

Thus, there is a need to develop a lithium secondary battery having excellent life characteristics while including the overlithiated manganese-based oxide.

### DISCLOSURE OF THE INVENTION

### TECHNICAL PROBLEM

An aspect of the present invention provides a positive electrode for a lithium secondary battery, which may achieve excellent life characteristics by using an overlithiated manganese-based oxide in which a ratio of lithium (Li) present in a transition metal layer to Li present in a lithium layer satisfies a specific condition, and a lithium secondary battery including the same.

### TECHNICAL SOLUTION

In one aspect, the present invention provides a positive electrode including an overlithiated manganese-based oxide, which has a molar ratio (Li/Me) of lithium to total metals excluding the lithium of greater than 1.1, has an amount of manganese among the total metals excluding the lithium of 50 mol% or more, and satisfies Equation (1),as a positive electrode active material.

$$\text{Equation (1): } 0.05 < I_{TM}/I_{Li} < 0.13$$

In Equation (1), $I_{TM}$ and $I_{Li}$ are a sum of areas of peaks appearing in a region of 1,000 ppm to 2,500 ppm and a sum of areas of peaks appearing in a region of 300 ppm to 900 ppm when performing peak deconvolution of a 1D nuclear magnetic resonance (NMR) centerband spectrum which is extracted from a 2D $^{7}Li$ MATPASS (Magic Angle Turning Phase Adjusted Spinning Sideband) NMR spectrum of the overlithiated manganese-based oxide, respectively.
Preferably, the overlithiated manganese-based oxide may satisfy Equation (1-1).

$$\text{Equation (1-1): } 0.06 \leq I_{TM}/I_{Li} \leq 0.12$$

In Equation (1-1), $I_{TM}$ and $I_{Li}$ are the same as defined in Equation (1).
In another aspect, the present invention provides a lithium secondary battery including a positive electrode; a negative electrode; a separator disposed between the positive electrode and the negative electrode; and an electrolyte, wherein the positive electrode is the above-described positive electrode according to the present invention.

## ADVANTAGEOUS EFFECTS

A positive electrode according to the present invention is characterized in that it includes an overlithiated manganese-based oxide having a molar ratio (Li/Me) of lithium to total metals excluding the lithium of greater than 1.1 and having an amount of manganese among the total metals excluding the lithium of 50 mol% or more as a positive electrode active material, but it uses a material in which $I_{TM}/I_{Li}$ obtained by peak deconvolution of a 1D NMR centerband spectrum, which is extracted by 2D $^{7}Li$ MATPASS (Magic Angle Turning Phase Adjusted Spinning Sideband) NMR analysis of the overlithiated manganese-based oxide, is within a specific range (i.e., greater than 0.05 to less than 0.13). In this case, the $I_{TM}$ is a sum of areas of peaks appearing in a region of 1,000 ppm to 2,500 ppm during the peak deconvolution, wherein it is a value representing a ratio of lithium located in a transition metal layer, and the $I_{Li}$ is a sum of areas of peaks appearing in a region of 300 ppm to 900 ppm during the peak deconvolution, wherein it is a value representing a ratio of lithium located in a lithium layer. If the ratio of the lithium (Li) present in the transition metal layer is increased, capacity is increased, but, since oxygen redox is increased, life characteristics are degraded. In contrast, if the ratio of the Li present in the transition metal layer is decreased, an effect of increasing the capacity is insignificant. Thus, in the present invention, since the overlithiated manganese-based oxide, in which the ratio of the Li present in the transition metal layer to the Li present in the lithium layer satisfies a specific condition (i.e., $I_{TM}/I_{Li}$ is in a range of greater than 0.05 to less than 0.13), is used as the positive electrode active material, an effect may be obtained in which life characteristics are significantly improved while high capacity characteristics are achieved.

## BRIEF DESCRIPTION OF THE DRAWINGS

FIG. 1 is a view comparing an NMR spectrum obtained by analyzing an overlithiated manganese-based oxide by a 1D Hahn-echo MAS NMR analysis method and an NMR spectrum obtained by analyzing the overlithiated manganese-based oxide by a 2D $^{7}Li$ MATPASS NMR analysis method.
FIG. 2 illustrates 1D NMR centerband spectra which are extracted from 2D $^{7}Li$ MATPASS (Magic Angle Turning Phase Adjusted Spinning Sideband) NMR spectra of overlithiated manganese-based oxides A to F.
FIG. 3 is a graph illustrating results of evaluating room-temperature life characteristics of lithium secondary batteries of Examples 1 to 4 and Comparative Examples 1 and 2.
FIG. 4 is a graph illustrating results of measuring discharge capacities of the lithium secondary batteries of Examples 1 to 4 and Comparative Examples 1 and 2.
FIG. 5 is a graph illustrating results of evaluating high-temperature life characteristics of the lithium secondary batteries of Examples 1 to 4 and Comparative Examples 1 and 2.

## MODE FOR CARRYING OUT THE INVENTION

Hereinafter, the present invention will be described in detail.
As a result of a significant amount of research conducted into improving life characteristics of a lithium secondary battery in which an overlithiated manganese-based oxide is used as a positive electrode active material, the present inventors have found that, in a case in which an overlithiated manganese-based oxide, in which a ratio of lithium (Li)present in a transition metal layer to Li present in a lithium layer satisfies a specific condition, is used as the positive electrode active material, life characteristics of a lithium secondary battery using the overlithiated manganese-based oxide are significantly improved, thereby leading to the completion of the present invention.

## Positive Electrode

A positive electrode according to the present invention is characterized in that it includes an overlithiated manganese-based oxide having a molar ratio (Li/Me) of lithium to total metals excluding the lithium of greater than 1.1 and having an amount of manganese among the total metals excluding the lithium of 50 mol% or more as a positive electrode active material, wherein the overlithiated manganese-based oxide satisfies Equation (1) below.

$$\text{Equation (1): } 0.05 < I_{TM}/I_{Li} < 0.13$$

In Equation (1), $I_{TM}$ and $I_{Li}$ are a sum of areas of peaks appearing in a region of 1,000 ppm to 2,500 ppm and a sum of areas of peaks appearing in a region of 300 ppm to 900 ppm when performing peak deconvolution of a 1D nuclear magnetic resonance (NMR) centerband spectrum which is extracted froma 2D $^7$Li MATPASS (Magic Angle Turning Phase Adjusted Spinning Sideband) NMR spectrum of the overlithiated manganese-based oxide, respectively.

2D $^7$Li MATPASS NMR measurement conditions in the present invention are as follows.

<Measurement conditions>

Solid 400MHz WB(wide bore) NMR System
MAS(magic angle spinning)rate: 55kHz
Spectral frequency(sfo1): 155.62 MHz($^7$Li)
Temperature: ambient temperature
$^7$Li Chemical shift reference: secondary LiF(s) reference at -1 ppm
Pulse program: 2D MATPASS
Spectral width(sw): 1250kHz
Acquisition time: 5ms
Carrier frequency (o1p) at 800ppm
Pulse length(p1): 1μs
Recycle delay(d1):1s
TD of F1 dimension(L1): 16
Number of scans:30000

After measurement, 9$^{th}$slice of 16 1D NMR spectra obtained after processing 2D data with xfb was extracted to obtain a 1D NMR centerband spectrum (After measurement, 2D data being processed by xfb and then a centerband slice ((L1/2+1)=(16/2+1)=9th slice) was taken).

The peak deconvolution of the 1D NMR centerband spectrum extracted from the 2D $^7$Li MATPASS (Magic Angle Turning Phase Adjusted Spinning Sideband) NMR spectrum may be performed using a DMFIT(64bit, release#20190125) NMR software. Specifically, after importing the 1D NMR centerband spectrum extracted from the $^7$Li MATPASS NMR spectrum into a DMFIT program, the peak deconvolution may be performed by a method in which, after selecting Gaussian/Lorentzian as a fitting model for the peak deconvolution and setting appropriate initial values for peak amplitude, peak position, peak width, and Gaussian/Lorentzian fraction (xG/(1-x)L), fitting was repeated until an appropriate convergence value was reached. In the present invention, the Gaussian/Lorentzian fraction (xG/(1-x)L) was fixed to 0.5 during the peak deconvolution, and the fitting was performed under conditions where nParVar=15, step=1, and Thresh=0.001.

Conventionally, a one-dimensional (1D) echo MAS NMR analysis method was mainly used for structural analysis of a positive electrode active material. However, in a case in which an overlithiated manganese-based oxide was measured by a 1D solid-state $^7$Li NMR analysis method, it was difficult to distinguish a main peak due to an overlap between the main peak and a spinning sideband (indicated by * in FIG. 1), and particularly, since peaks near 1,500 ppm, as characteristic peaks of $Li_2MnO_3$ included in the overlithiated manganese-based oxide, were overlapped with the spinning sideband, it was difficult to analyze structural characteristics of the positive electrode active material (see FIG. 1).

However, if a 2D $^7$Li MATPASS NMR analysis method is used, a high-resolution NMR spectrum may be obtained, and the structural characteristics of the overlithiated manganese-based oxide may be distinguished through the peak deconvolution of the extracted spectrum. As a result of analyzing various overlithiated manganese-based oxides by the 2D $^7$Li MATPASS NMR analysis method, the present inventors have found that, in a case in which an overlithiated manganese-based oxide, in which $I_{TM}/I_{Li}$ satisfies a specific condition (greater than 0.05 to less than 0.13), is used in a positive electrode, life characteristics of a lithium secondary battery are significantly improved, thereby leading to the completion of the present invention.

The $I_{TM}/I_{Li}$ is a value representing a ratio of lithium located in a transition metal layer to lithium located in a lithium layer of a crystal structure of the overlithiated manganese-based oxide, wherein, in a case in which the $I_{TM}/I_{Li}$is in a range of

greater than 0.05 to less than 0.13, since a degree of oxygen redox occurring in a charge/discharge process is appropriately controlled, high capacity and excellent life characteristics may be achieved.

Preferably, the overlithiated manganese-based oxide may have an $I_{TM/}I_{Li}$ of 0.06 to 0.12, and may preferably have an $I_{TM/}I_{Li}$ of 0.08 to 0.12, more preferably 0.09 to 0.12, even more preferably 0.097 to 0.11, and most preferably 0.10 to 0.11. In a case in which the $I_{TM/}I_{Li}$ satisfies the above range, high-temperature life characteristics are more excellent.

In the overlithiated manganese-based oxide, the molar ratio (Li/Me) of Li to the number of moles of total metallic elements excluding the Li may be in a range of 1.1 to 1.5, 1.2 to 1.5, 1.25 to 1.5, or 1.25 to 1.4. When the Li/Me ratio satisfies the above range, rate capability and capacity characteristics are excellent. If the Li/Me ratio is excessively high, electrical conductivity may be decreased and a rock salt phase ($Li_2MnO_3$) may be increased to accelerate degradation rate, and, if the Li/Me ratio is excessively low, an energy density improvement effect is insignificant.

Also, the overlithiated manganese-based oxide may include nickel:manganese at a molar ratio of 30:70 to 45:55, preferably, 31:69 to 45:55.When the molar ratio of nickel to manganese in the overlithiated manganese-based oxide satisfies the above range, both capacity characteristics and life characteristics are excellent. In a case in which a nickel content is less than 30 mol%, since the rock salt phase ($Li_2MnO_3$) is increased, there is a problem in that cell degradation is accelerated.

Preferably, the overlithiated manganese-based oxide may be represented by Formula 1.

[Formula 1] $Li_aNi_bCo_cMn_dM_eO_2$

In Formula 1, M may be at least one selected from the group consisting of aluminum (A1), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr).

a is a molar ratio of Li in the overlithiated manganese-based oxide, wherein a may satisfy $1<a$, $1.1\leq a\leq 1.5$, or $1.1\leq a\leq 1.3$.When a satisfies the above range, irreversible capacity of a silicon (Si)-based negative electrode active material may be sufficiently compensated, and high capacity characteristics may be achieved.

b is a molar ratio of nickel (Ni) in the overlithiated manganese-based oxide, wherein b may satisfy $0.1\leq b<0.5$, $0.2\leq b<0.5$, or $0.3\leq b<0.5$.

c is a molar ratio of Co in the overlithiated manganese-based oxide, wherein c may satisfy $0\leq c<0.1$, $0\leq c\leq 0.08$, or $0\leq c\leq 0.05$. In a case in which c is 0.1 or more, since it is difficult to secure high capacity and gas generation and degradation of the positive electrode active material may be intensified, the life characteristics may be degraded.

d is a molar ratio of manganese (Mn) in the overlithiated manganese-based oxide, wherein d may satisfy $0.5\leq d\leq 0.9$, $0.50\leq d\leq 0.80$, or $0.50\leq d\leq 0.70$. In a case in which d is less than 0.5, since a ratio of the rock salt phase is excessively small, an effect of compensating the irreversible capacity of the negative electrode active material and improving capacity is insignificant.

e is a molar ratio of doping element M in the overlithiated manganese-based oxide, wherein e may satisfy $0\leq e\leq 0.1$ or $0\leq e\leq 0.05$. An excessively large amount of the doping element may adversely affect capacity of the active material.

The overlithiated manganese-based oxide has a structure in which a rock salt phase ($Li_2MnO_3$) and a layered phase ($LiM'O_2$, where M' includes Ni and Mn) are mixed, and a composition thereof may also be represented by [Formula 2] below.

[Formula 2] $X\ Li_2MnO_3\cdot(1-X)Li[Ni_{1-y-z-w}Mn_yCo_zM_w]O_2$

In [Formula 2], M may be at least one selected from the group consisting of Al, B, Co, W, Mg, V, Ti, Zn, Ga, In, Ru, Nb, Sn, Sr, and Zr.

X represents a ratio of the $Li_2MnO_3$ phase in the overlithiated manganese-based oxide, wherein X may satisfy $0.2\leq X\leq 0.5$, $0.25\leq X\leq 0.5$, or $0.25\leq X\leq 0.4$. When the ratio of the $Li_2MnO_3$ phase in the overlithiated manganese-based oxide satisfies the above range, irreversible capacity of a $SiO_x$ negative electrode active material may be sufficiently compensated, and high capacity characteristics may be achieved.

y is a molar ratio of Mn in the $LiM'O_2$ layered phase, wherein y may satisfy $0.4\leq y<1$, $0.4\leq y\leq 0.8$, or $0.4\leq y\leq 0.7$.

z is a molar ratio of Co in the $LiM'O_2$ layered phase, wherein z may satisfy $0\leq z\leq 0.1$, $0\leq z\leq 0.08$, or $0\leq z\leq 0.05$. In a case in which z is greater than 0.1, since the gas generation and the degradation of the positive electrode active material may be intensified, the life characteristics may be degraded.

w is a molar ratio of doping element M in the $LiM'O_2$ layered phase, wherein w may satisfy $0\leq w\leq 0.1$ or $0\leq w\leq 0.05$.

The positive electrode active material according to the present invention may further include a coating layer on a surface of the overlithiated manganese-based oxide, if necessary. In a case in which the positive electrode active material includes the coating layer, since a contact between the overlithiated manganese-based oxide and an electrolyte is suppressed by the coating layer, an electrolyte solution side reaction is reduced, and, as a result, an effect of improving life characteristics may be obtained.

The coating layer may include a coating element $M^1$, wherein the coating element $M^1$, for example, may be at least one selected from the group consisting of Al, B, Co, W, Mg, V, Ti, Zn, Ga, In, Ru, Nb, Sn, Sr, and Zr, may be preferably Al, Co, Nb, W, and a combination thereof, and may be more preferably Al, Co, and a combination thereof. Two or more kinds of the coating element $M^1$ may be included, and, for example, Al and Co may be included.

The coating element may be present in an oxide form, that is, $M^1Oz$ ($1 \le z \le 4$) in the coating layer.

The coating layer may be formed through a method such as dry coating, wet coating, chemical vapor deposition (CVD), physical vapor deposition (PVD), and atomic layer deposition (ALD).Among them, it is desirable that the coating layer is formed through the atomic layer deposition method in terms of forming an area of the coating layer widely.

The area of the coating layer formed may be in a range of 10% to 100%, preferably 30% to 100%, and more preferably 50% to 100% based on a total surface area of the overlithiated manganese-based oxide particle. When the area of the coating layer formed satisfies the above range, the effect of improving life characteristics is excellent.

The positive electrode active material according to the present invention may be in a form of a secondary particle in which a plurality of primary particles are aggregated, and an average particle diameter $D_{50}$ of the secondary particle may be in a range of 2 μm to 10 μm, preferably 2 μm to 8 μm, and more preferably 4 μm to 8 μm. When the $D_{50}$ of the positive electrode active material satisfies the above range, excellent electrode density may be achieved and a decrease in capacity and rate capability may be minimized.

Also, the positive electrode active material may have a Brunauer-Emmett-Teller (BET) specific surface area of 1 $m^2/g$ to 10 $m^2/g$, 3$m^2/g$ to 8$m^2/g$, or 4 $m^2/g$ to 6$m^2/g$. If the BET specific surface area of the positive electrode active material is excessively low, since a reaction area with the electrolyte is insufficient, it is difficult to achieve sufficient capacity, and, if the specific surface area is excessively high, since moisture absorption is rapid and a side reaction with the electrolyte is accelerated, it is difficult to secure the life characteristics.

The overlithiated manganese-based oxide may be prepared by mixing a transition metal precursor and a lithium raw material and then sintering the mixture.

The lithium raw material, for example, may include lithium-containing carbonates (e.g., lithium carbonate, etc.), hydrates (e.g., lithium hydroxide hydrate ($LiOH \cdot H_2O$), etc.), hydroxides (e.g., lithium hydroxide, etc.), nitrates (e.g., lithium nitrate ($LiNO_3$), etc.), or chlorides (e.g., lithium chloride (LiCl), etc.), and any one thereof or a mixture of two or more may be used.

The transition metal precursor may be in a form of a hydroxide, oxide, or carbonate. In a case in which the precursor in the form of a carbonate is used, it is more preferable in that a positive electrode active material having a relatively high specific surface area may be prepared.

The transition metal precursor may be prepared through a co-precipitation process. For example, after a metal solution is prepared by dissolving each transition metal-containing raw material in a solvent, the transition metal precursor may be prepared by a method of mixing the metal solution, an ammonium cationic complexing agent, and a basic compound and then performing a co-precipitation reaction. Also, an oxidizing agent or oxygen gas may be further added during the co-precipitation reaction, if necessary.

In this case, the transition metal-containing raw material may be acetic acid salts, carbonates, nitrates, sulfates, halides, or sulfides of each transition metal. Specifically, the transition metal-containing raw material may be NiO, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$,$Mn_2O_3$, $MnO_2$, $Mn_3O_4$, $MnCO_3$, $Mn(NO_3)_2$, $MnSO_4 \cdot H_2O$, manganese acetate, manganese halide, $Co_2O_3$, cobalt sulfate, cobalt nitrate, cobalt carbonate, cobalt acetate, or cobalt halide.

The ammonium cationic complexing agent may be at least one selected from the group consisting of $NH_4OH$, $(NH_4)_2SO_4$, $NH_4NO_3$, $NH_4Cl$, $CH_3COONH_4$, and $NH_4CO_3$.

The basic compound may be at least one selected from the group consisting of NaOH, $Na_2CO_3$, KOH, and $Ca(OH)_2$. The form of the precursor may vary depending on a type of the basic compound used. For example, in a case in which NaOH is used as the basic compound, a precursor in the form of a hydroxide may be obtained, and, in a case in which $Na_2CO_3$ is used as the basic compound, a precursor in the form of a carbonate may be obtained. Also, in a case in which the basic compound and the oxidizing agent are used together, a precursor in the form of an oxide may be obtained.

The transition metal precursor and the lithium raw material may be mixed in amounts such that a molar ratio of total transition metals (Ni+Co+Mn):Li is in a range of 1:1.05 to 1:2, preferably 1:1.1 to 1:1.8, and more preferably 1:1.25to 1:1.8.

The sintering may be performed at a temperature of 600°C to 1,000°Cor 700°C to 950°C, and sintering time may be in a range of 5 hours to 30 hours or 5 hours to 20 hours. Also, sintering atmosphere may be an air atmosphere or oxygen atmosphere, and, for example, may be an atmosphere containing 20 vol% to 100 vol% of oxygen.

The positive electrode according to the present invention may further include a conductive agent and a binder in addition to the positive electrode active material, if necessary.

The conductive agent, for example, may include spherical or flaky graphite; a carbon-based material such as carbon black, acetylene black, Ketjen black, channel black, furnace black, lamp black, thermal black, carbon fibers, single-walled carbon nanotubes, and multi-walled carbon nanotubes; powder or fibers of metal such as copper, nickel, aluminum,

and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 20 wt%, 1 wt% to 20 wt%, or 1 wt% to 10 wt% based on a total weight of the positive electrode active material layer.

Also, the binder, for example, may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the positive electrode active material layer.

The positive electrode may be prepared according to a method of preparing a positive electrode which is known in the art. For example, the positive electrode may be prepared by a method in which a positive electrode collector is coated with a positive electrode slurry, which is prepared by dissolving or dispersing the positive electrode active material as well as optionally the binder and the conductive agent in a solvent, rolled and dried, or may be prepared by casting the positive electrode slurry on a separate support and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 μm to 500 μm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the positive electrode slurry may be adjusted to have an appropriate viscosity in consideration of an application thickness of the positive electrode slurry, preparation yield, or workability, and is not particularly limited.

As described above, since the positive electrode, which includes the overlithiated manganese-based oxide satisfying Equation (1) as the positive electrode active material, may be stably operated even if a charge end voltage is set as high as 4.3V to 4.5V, high capacity characteristics may be achieved and excellent life characteristics are exhibited at room temperature and high temperature.

## Lithium Secondary Battery

Next, a lithium secondary battery according to the present invention will be described.

The lithium secondary battery according to the present invention includes a positive electrode; a negative electrode; a separator disposed between the positive electrode and the negative electrode; and an electrolyte. In this case, the positive electrode is the above-described positive electrode according to the present invention. Since the positive electrode has been described above, a detailed description thereof will be omitted.

### Negative Electrode

The negative electrode according to the present invention includes a negative electrode active material layer including a negative electrode active material, and the negative electrode active material layer may further include a conductive agent and/or a binder, if necessary.

Various negative electrode active materials used in the art, for example, a silicon-based negative electrode active material, a carbon-based negative electrode active material, a metal alloy, or a combination thereof may be used as the negative electrode active material, and the negative electrode active material is not particularly limited.

Preferably, the negative electrode active material may include a silicon-based negative electrode active material.

The silicon-based negative electrode active material, for example, may be selected from the group consisting of silicon (Si), $SiO_m$ (where, 0<m<2), a Si-C composite, a Si-$M^a$ alloy ($M^a$ is at least one selected from the group consisting of Al, Sn, Mg, copper (Cu), iron (Fe), lead (Pb), Zn, Mn, chromium (Cr), Ti, and Ni),and a combination thereof.

Also, the silicon-based negative electrode active material may be doped with $M^b$ metal, and, in this case, the $M^b$ metal may be a Group 1 alkali metal element and/or a Group 2 alkaline earth metal element, and, for example, may be Li or Mg. Specifically, the silicon-based negative electrode active material may be Si, $SiO_m$ (where, 0<m<2), or a Si-C composite which is doped with the $M^b$ metal. With respect to the metal-doped silicon-based negative electrode active

material, since capacity of the active material is reduced due to the doping element, but it has high efficiency, high energy density may be achieved.

Furthermore, the silicon-based negative electrode active material may further include a carbon coating layer on a surface of the particle. In this case, an amount of carbon coating may be 20 wt% or less, preferably, 0.1 wt% to 20 wt% based on a total weight of the silicon-based negative electrode active material. The carbon coating layer may be formed through a method such as dry coating, wet coating, chemical vapor deposition (CVD), physical vapor deposition (PVD), and atomic layer deposition (ALD).

Also, with respect to a particle size of the silicon-based negative electrode active material, $D_{50}$ may be in a range of 3 μm to 8 μm, preferably,4 μm to 7 μm, and $D_{min}$ to $D_{max}$ may be in a range of 0.5 μm to 30 μm, preferably 0.5 μm to 20 μm, and more preferably 1 μm to 15 μm.

The silicon-based negative electrode active material may be included in an amount of 1 wt% to 100 wt%, 1 wt% to 50 wt%, 1 wt% to 30 wt%, 1 wt% to 15 wt%, 10 wt% to 70 wt%, or 10 wt% to 50 wt% based on a total weight of the negative electrode active material included in the negative electrode.

Furthermore, the negative electrode may include a carbon-based negative electrode active material. The carbon-based negative electrode active material, for example, may be artificial graphite, natural graphite, graphitized carbon fibers, amorphous carbon, soft carbon, or hard carbon, but is not limited thereto.

The carbon-based negative electrode active material may be included in an amount of 1 wt% to 100 wt%, 50wt% to 99 wt%, 70 wt% to 99 wt%, 85wt% to 99 wt%, 30 wt% to 90 wt%, or 50 wt% to 90 wt% based on the total weight of the negative electrode active material included in the negative electrode.

According to an embodiment, the negative electrode active material may be a mixture of the silicon-based negative electrode active material and the carbon-based negative electrode active material, wherein a mixing ratio of the silicon-based negative electrode active material: the carbon-based negative electrode active material may be in a range of 1:99 to 50:50, preferably, 3:97 to 30:70, as a weight ratio. In a case in which the mixing ratio of the silicon-based negative electrode active material to the carbon-based negative electrode active material satisfies the above range, excellent cycle performance may be secured by suppressing the volume expansion of the silicon-based negative electrode active material while improving the capacity characteristics.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

The conductive agent, for example, may include spherical or flaky graphite; a carbon-based material such as carbon black, acetylene black, Ketjen black, channel black, furnace black, lamp black, thermal black, carbon fibers, single-walled carbon nanotubes, and multi-walled carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 30 wt%, 1 wt% to 20 wt%, or 1 wt% to 10 wt% based on the total weight of the negative electrode active material layer.

Preferably, single-walled carbon nanotubes may be used as the conductive agent. In a case in which the single-walled carbon nanotubes are used as the conductive agent, a conductive path is evenly formed on the surface of the negative electrode active material, and, as a result, an effect of improving cycle characteristics may be obtained.

The binder, for example, may include polyvinylidene fluoride (PVDF), polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the negative electrode active material layer.

In the negative electrode, the negative electrode active material layer may be a single layer or may have a multilayer structure composed of two or more layers. In a case in which the negative electrode active material layer has the multilayer structure composed of two or more layers, each layer may have different types and/or amounts of the negative electrode active material, the binder, and/or the conductive agent. For example, in the negative electrode according to the present invention, a lower layer may be formed such that the amount of the carbon-based negative electrode active material is higher than that of an upper layer, the upper layer may be formed such that the amount of the silicon-based negative electrode active material is high, and, in this case, an effect of improving the rapid charging performance may be obtained in comparison to a case where the negative electrode active material layer is formed as a single layer.

In the lithium secondary battery of the present invention, it is desirable to configure an N/P ratio, which is a ratio of negative electrode capacity to positive electrode capacity, differently according to a type of the negative electrode active material used. For example, in a case in which 100% of Si is used as the negative electrode active material, it is desirable for the N/P ratio to be in a range of about 150% to about 300%, and, in a case in which a mixture of $SiO_m$ and the carbon-

based negative electrode active material is used as the negative electrode active material, it is desirable for the N/P ratio to be in a range of about 100% to about 150%.

The negative electrode may be prepared according to a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried, or may be prepared by casting the negative electrode slurry on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 μm to 500um, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of an application thickness of the negative electrode material mixture, manufacturing yield, and workability, and is not particularly limited.

## Separator

The separator in the lithium secondary battery of the present invention separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

## Electrolyte

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiN(FSO_2)_2$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration

range of 0.1 M to 5.0 M.

Also, in order to improve the life characteristics of the battery, suppress the reduction in capacity, and inhibit the gas generation, an additive may be included in the electrolyte. As the additive, various additives used in the art, for example, fluoroethylene carbonate (FEC), vinylene carbonate (VC), vinylethylene carbonate (VEC), ethylene sulfate (ESa), lithium difluorophosphate ($LiPO_2F_2$), lithium bisoxalato borate (LiBOB), lithium tetrafluoro borate ($LiBF_4$), lithium difluorooxalato borate (LiDFOB), lithium difluorobisoxalatophosphate (LiDFBP), lithium tetrafluorooxalato phosphate (LiTFOP), lithium methyl sulfate (LiMS), lithium ethyl sulfate (LiES) propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyldi(pro-2-y-1-yl)phosphate (EDP), 5-methyl-5propargyloxylcarbonyl-1,3-dioxane-2-one (MPOD), a compound represented by the following Formula A (e.g., cyanoethylpolyvinyl alcohol, PVA-CN), a compound represented by the following Formula B (e.g., heptafluorobutyrcyanoethylpolyvinyl alcohol, PF-PVA-CN), a compound represented by the following Formula C (e.g., propargyl 1H-imidazole-1-carboxylate, PAC), and/or a compound represented by the following Formula D (e.g., arylimidazole such as $C_6H_8N_2$) may be used.

[Formula A]

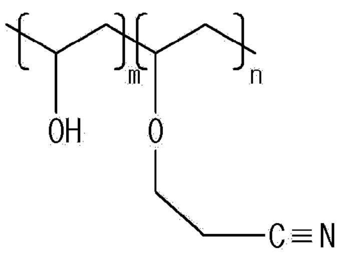

In Formula A, m and n are each independently an integer of 1 to 100.

[Formula B]

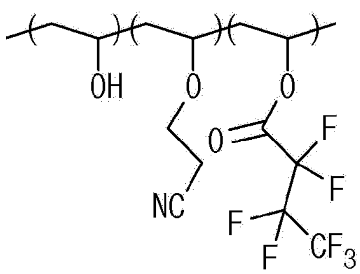

[Formula C]

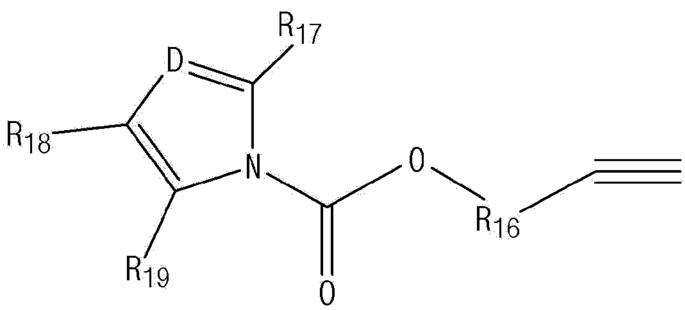

In Formula C, $R_{16}$ is a linear or non-linear alkylene group having 1 to 3 carbon atoms, $R_{17}$ to $R_{19}$ are each independently at least one selected from the group consisting of hydrogen, an alkyl group having 1 to 3 carbon atoms, and -CN, and D is CH, or N.

[Formula D]

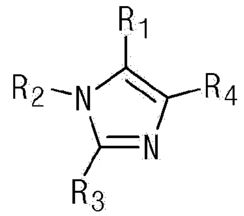

In Formula D,

$R_1$, $R_2$, $R_3$, and $R_4$ may each independently include hydrogen; or an alkyl group having 1 to 5 carbon atoms, a cyano group (CN), an allyl group, a propargyl group, an amine group, a phosphate group, an ether group, a benzene group, a cyclohexyl group, a silyl group, an isocyanate group (-NCO), or a fluorine group (-F).

Preferably, compounds acting as an oxygen scavenger may be used as the additive. Materials with a phosphite-based structure (see Formula E) such as tristri(methylsilyl)phosphite (TMSPi), tristrimethylphosphite (TMPi), and tris(2,2,2-trifluoroethyl)phosphite (TTFP);tristri(methylsilyl)phosphate (TMSPa); polyphosphoric acid trimethylsilyl ester (PPSE); tris(pentafluorophenyl)borane (TPFPB); compounds including a coumarin structure(see Formula F) such as coumarin-3-carbonitrile (CMCN), 7-ethynylcoumarin (ECM), 3-acetylcoumarin (AcCM), and 3-(trimethylsilyl)coumarin (TMSCM); 3-[(trimethylsilyl)oxyl]-2H-1-benzopyran-2-one (TMSOCM), 3-(2-propyn-1-yloxyl)-2H-1-benzopyran-2-one (POCM), or 2-propyn-1-yl-2-oxo-2H-1-benzopyran-3-carboxylate (OBCM) may be used as the compound acting as the oxygen scavenger.

[Formula E]

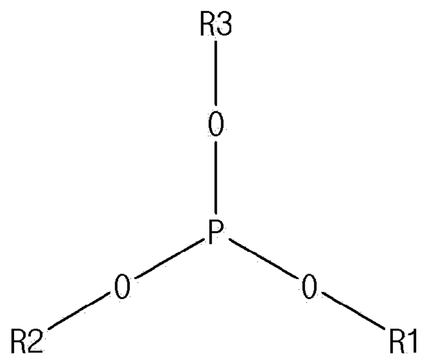

[Formula F]

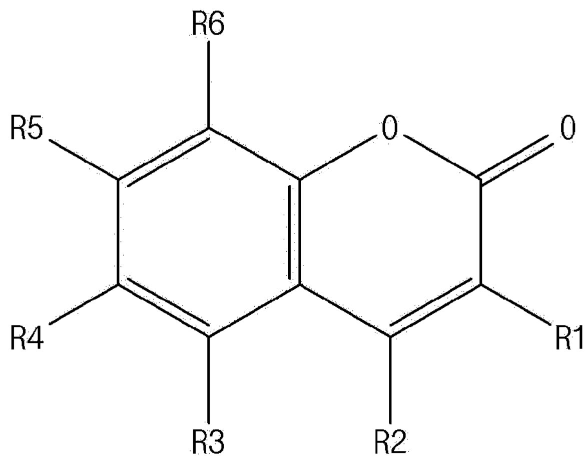

In Formulae E and F, $R_1$ to $R_6$ may each independently include an unsubstituted or substituted alkenyl group having 2 to 20 carbon atoms, an unsubstituted or substituted alkynyl group having 2 to 20 carbon atoms, a cyano group, a fluoro group (F), an ether group (C-O-C), a carboxyl group (O-C=O), a trimethylsilyl group (-TMS), an isocyanate group (-NCO), and/or an isothiocyanate group (-NCS).

The lithium secondary battery according to the present invention as described above may be suitably used in portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail through specific examples.

Experimental Example 1: Metal Composition Ratio, $I_{TM}/I_{Li}$ Measurement

Six types of commercially available overlithiated manganese-based oxides A to F were prepared, a metal component ratio of each of the overlithiated manganese-based oxides was measured through ICP analysis, and measurement results are presented in Table 1 below. In this case, mol% of Ni, Co, and Mn is a percentage of the number of moles of each metallic element relative to the total number of moles of remaining metals excluding lithium.

Next, after a 2D $^7$Li MATPASS (Magic Angle Turning Phase Adjusted Spinning Sideband) NMR spectrum was measured for the overlithiated manganese-based oxides A to F, a 1D NMR centerband spectrum was extracted.FIG. 2 illustrates the 1D NMR centerband spectra which were extracted from the 2D $^7$Li MATPASS (Magic Angle Turning Phase Adjusted Spinning Sideband) NMR spectra of the overlithiated manganese-based oxides A to F.

Then, an $I_{TM}/I_{Li}$ value was measured through peak deconvolution of the 1D NMR centerband spectrum, and measurement results are presented in Table 1 below.

In this case, $I_{TM}$ was a sum of areas of peaks appearing in a region of 1,000 ppm to 2,500 ppm during the peak deconvolution, $I_{Li}$ was a sum of areas of peaks appearing in a region of 300 ppm to 900 ppm during the peak deconvolution, and the measurement of the 2D $^7$Li MATPASS NMR spectrum, the extraction of the 1D NMR centerband spectrum, and the peak deconvolution were performed under the same conditions as described above.

[Table 1]

| | Ni [mol%] | Co [mol%] | Mn [mol%] | Li/ (Ni+Co+ Mn) molar ratio | $I_{TM}/I_{Li}$ |
|---|---|---|---|---|---|
| A | 36.4 | 0.5 | 63.1 | 1.3 | 0.100 |
| B | 36.3 | 0.5 | 63.2 | 1.38 | 0.105 |
| C | 40.6 | 0.5 | 58.9 | 1.17 | 0.096 |
| D | 31.0 | 0.5 | 68.5 | 1.37 | 0.097 |
| E | 30.8 | 0.5 | 68.7 | 1.33 | 0.130 |
| F | 24.3 | 23.6 | 52.1 | 1.39 | 0.050 |

**Example 1**

The overlithiated manganese-based oxide A, a conductive agent (Super C65), and a PVDF binder were mixed in N-methylpyrrolidone in a weight ratio of 96.5:1.5:2 to prepare a positive electrode slurry. One surface of an aluminum current collector was coated with the positive electrode slurry, dried, and then rolled to prepare a positive electrode.

A lithium secondary battery was prepared by preparing an electrode assembly by disposing a separator between the positive electrode and a lithium metal electrode, disposing the electrode assembly in a battery case, and then injecting an electrolyte solution into the case. In this case, the electrolyte solution was prepared by dissolving 1 M $LiPF_6$ in a mixed organic solvent, in which ethylene carbonate/dimethyl carbonate/diethyl carbonate were mixed in a volume ratio of 1:2:1,

and adding 2 wt% of vinylene carbonate (VC).

The lithium secondary battery prepared as described above was charged at 0.1 C to 4.65 V at 45°C and then discharged at 0.1 C to 2.0 V to perform an activation process.

**Example 2**

A positive electrode and a lithium secondary battery were prepared in the same manner as in Example 1 except that the overlithiated manganese-based oxide B was used instead of the overlithiated manganese-based oxide A.

**Example 3**

A positive electrode and a lithium secondary battery were prepared in the same manner as in Example 1 except that the overlithiated manganese-based oxide C was used instead of the overlithiated manganese-based oxide A.

**Example 4**

A positive electrode and a lithium secondary battery were prepared in the same manner as in Example 1 except that the overlithiated manganese-based oxide D was used instead of the overlithiated manganese-based oxide A.

**Comparative Example 1**

A positive electrode and a lithium secondary battery were prepared in the same manner as in Example 1 except that the overlithiated manganese-based oxide E was used instead of the overlithiated manganese-based oxide A.

**Comparative Example 2**

A positive electrode and a lithium secondary battery were prepared in the same manner as in Example 1 except that the overlithiated manganese-based oxide F was used instead of the overlithiated manganese-based oxide A.

**Experimental Example 2: Room-temperature Life Characteristics**

While charging of each of the lithium secondary batteries prepared by the examples and the comparative examples at a constant current of 0.33 C to 4.4 V at 25°C and then discharging of each lithium secondary battery at a constant current of 0.33 C to 2.5 V were set as one cycle and 50 cycles of the charging and discharging were performed, a capacity retention was measured to evaluate room-temperature life characteristics. Measurement results are illustrated in FIG. 3. As illustrated in FIG. 3, it may be confirmed that the lithium secondary batteries of Examples 1 to 4 using the overlithiated manganese-based oxides A to D, in which $I_{TM}/I_{Li}$ satisfied a range of 0.06 to 0.12, as the positive electrode active materials had better room-temperature life characteristics than the lithium secondary battery of Comparative Example 1 using the overlithiated manganese-based oxide E, in which $I_{TM}/I_{Li}$ was greater than 0.12, as the positive electrode active material and the lithium secondary battery of Comparative Example 2 using the overlithiated manganese-based oxide F, in which $I_{TM}/I_{Li}$ was less than 0.06, as the positive electrode active material. Particularly, with respect to the lithium secondary battery of Comparative Example 1 using the overlithiated manganese-based oxide E, in which $I_{TM}/I_{Li}$ was greater than 0.12, as the positive electrode active material, it may be confirmed that the room-temperature life characteristics were significantly degraded.

**Experimental Example 3: Initial Capacity Evaluation**

The lithium secondary batteries prepared by the examples and the comparative examples were charged at a constant current of 0.1 C to 4.4 V at 25°C and then discharged at a constant current of 0.1 C to 2.5V to measure discharge capacity. Measurement results are presented in FIG. 4 and Table 2 below.

[Table 2]

| | 0.1 C discharge capacity (mAh/g) |
|---|---|
| Example 1 | 210.9 |
| Example 2 | 216.7 |
| Example 3 | 199.0 |

(continued)

| | 0.1 C discharge capacity (mAh/g) |
|---|---|
| Example 4 | 225.3 |
| Comparative Example 1 | 190.1 |
| Comparative Example 2 | 208.1 |

According to FIG. 4 and Table 2, it may be confirmed that initial capacity characteristics of the lithium secondary batteries of Comparative Examples 1 and 2 using the overlithiated manganese-based oxides, in which an $I_{TM/}I_{Li}$ range was outside the scope of the present invention, were degraded in comparison to those of the lithium secondary batteries of Examples 1, 2, and 4. Since the overlithiated manganese-based oxide of Example 3 had a small Li/Me ratio, initial capacity of the lithium secondary battery using this was somewhat low, but it may be confirmed that the higher initial capacity was achieved than that of the lithium secondary battery using the overlithiated manganese-based oxide of Comparative Example 1 which had a higher Li/Me ratio.

**Experimental Example 4: High-temperature Life Characteristics**

While charging of each of the lithium secondary batteries prepared by the examples and the comparative examples at a constant current of 0.33 C to 4.4 V at 45°C and then discharging of each lithium secondary battery at a constant current of 0.33 C to 2.5 V were set as one cycle and 50 cycles of the charging and discharging were performed, a capacity retention and a degree of voltage drop were measured. In this case, the degree of voltage drop was measured as a difference between an average voltage after 25 cycles/50 cycles, which was measured by measuring the average voltages after 25 cycles and after 50 cycles, and an average voltage in 1 cycle.

Measurement results of the capacity retention are illustrated in FIG. 5, and the degree of voltage drop ($\Delta V$) is presented in [Table 3] below.

[Table 3]

| | 1 cycle | After 25 cycles | | After 50 cycles | |
|---|---|---|---|---|---|
| | Average voltage [V] | Average voltage [V] | Voltage drop [ΔV] | Average voltage [V] | Voltage drop [ΔV] |
| Example 1 | 3.684 | 3.646 | -0.038 | 3.624 | -0.060 |
| Example 2 | 3.657 | 3.622 | -0.035 | 3.599 | -0.058 |
| Example 3 | 3.739 | 3.706 | -0.033 | 3.687 | -0.052 |
| Example 4 | 3.600 | 3.561 | -0.039 | 3.530 | -0.070 |
| Comparative Example1 | 3.549 | 3.514 | -0.035 | 3.495 | -0.054 |
| Comparative Example2 | 3.581 | 3.533 | -0.048 | 3.502 | -0.079 |

According to [Table 3],with respect to the lithium secondary battery of Comparative Example 2, it may be confirmed that the degree of voltage drop after high-temperature cycles was larger than those of the lithium secondary batteries of Examples 1 to 4. Also, according to FIG. 5, with respect to the lithium secondary battery of Comparative Example 1, it may be confirmed that capacity retention after high-temperature cycles was significantly reduced in comparison to those of the lithium secondary batteries of Examples 1 to 4. As described above, since the capacities or voltages after high-temperature cycles of the lithium secondary batteries of Comparative Examples 1 and 2 were low, energy densities (capacity × voltage) after high-temperature cycles were inferior.

## Claims

1. A positive electrode comprising an overlithiated manganese-based oxide, which has a molar ratio (Li/Me) of lithium to total metals excluding the lithium of greater than 1.1, has an amount of manganese among the total metals excluding the lithium of 50 mol% or more, and satisfies Equation (1),as a positive electrode active material.

$$\text{Equation (1): } 0.05 < I_{TM}/I_{Li} < 0.13$$

wherein, in Equation (1), $I_{TM}$ and $I_{Li}$ are a sum of areas of peaks appearing in a region of 1,000 ppm to 2,500 ppm and a sum of areas of peaks appearing in a region of 300 ppm to 900 ppm when performing peak deconvolution of a 1D nuclear magnetic resonance (NMR) centerband spectrum which is extracted from a 2D $^{7}Li$ MATPASS (Magic Angle Turning Phase Adjusted Spinning Sideband) NMR spectrum of the overlithiated manganese-based oxide, respectively.

**2.** The positive electrode of claim 1, wherein the overlithiated manganese-based oxide satisfies Equation (1-1).

$$\text{Equation (1-1): } 0.06 \leq I_{TM}/I_{Li} \leq 0.12$$

wherein, in Equation (1-1), $I_{TM}$ and $I_{Li}$ are the sum of the areas of the peaks appearing in the region of 1,000 ppm to 2,500 ppm and the sum of the areas of the peaks appearing in the region of 300 ppm to 900 ppm when performing the peak deconvolution of the 1D NMR centerband spectrum which is extracted from the 2D $^{7}Li$ MATPASS (Magic Angle Turning Phase Adjusted Spinning Sideband) NMR spectrum of the overlithiated manganese-based oxide, respectively.

**3.** The positive electrode of claim 1, wherein the overlithiated manganese-based oxide has the molar ratio (Li/Me) of the lithium to the total metals excluding the lithium of 1.2 to 1.5.

**4.** The positive electrode of claim 1, wherein a molar ratio of nickel:manganese in the overlithiated manganese-based oxide is in a range of 30:70 to 45:55.

**5.** The positive electrode of claim 1, wherein the overlithiated manganese-based oxide is represented by Formula 1.

[Formula 1] $Li_aNi_bCo_cMn_dM^1_eO_2$

wherein, in Formula 1, $1.05 \leq a \leq 1.5$, $0.1 \leq b < 0.5$, $0 \leq c < 0.1$, $0.5 \leq d \leq 0.9$, and $0 \leq e \leq 0.1$, and $M^1$ is at least one selected from the group consisting of aluminum (Al), boron (B), cobalt (Co), tungsten (W),magnesium (Mg),vanadium (V), titanium (Ti), zinc (Zn), gallium (Ga), indium (In), ruthenium (Ru), niobium (Nb), tin (Sn), strontium (Sr), and zirconium (Zr).

**6.** The positive electrode of claim 5, wherein, in Formula 1, $1.1 \leq a \leq 1.3$, $0.3 \leq b < 0.5$, $0 \leq c \leq 0.05$, $0.5 \leq d < 0.7$, and $0 \leq e \leq 0.1$.

**7.** The positive electrode active of claim 1, wherein the overlithiated manganese-based oxide has a structure in which a rock salt phase and a layered phase are mixed.

**8.** The positive electrode of claim 1, wherein the overlithiated manganese-based oxide is represented by Formula 2.

[Formula 2] $X\ Li_2MnO_3 \cdot (1-X)Li[Ni_{1-y-z-w}Mn_yCo_zM^2_w]O_2$

wherein, in [Formula 2],
$M^2$ is at least one selected from the group consisting of Al, B, Co, W, Mg, V, Ti, Zn, Ga, In, Ru, Nb, Sn, Sr, and Zr, and $0.2 \leq X \leq 0.5$, $0.4 \leq y < 1$, $0 \leq z \leq 0.1$, and $0 \leq w \leq 0.1$.

**9.** A lithium secondary battery comprising a positive electrode; a negative electrode; a separator disposed between the positive electrode and the negative electrode; and an electrolyte, wherein the positive electrode is the positive electrode of any one of claims 1 to 8.

[FIG. 1]

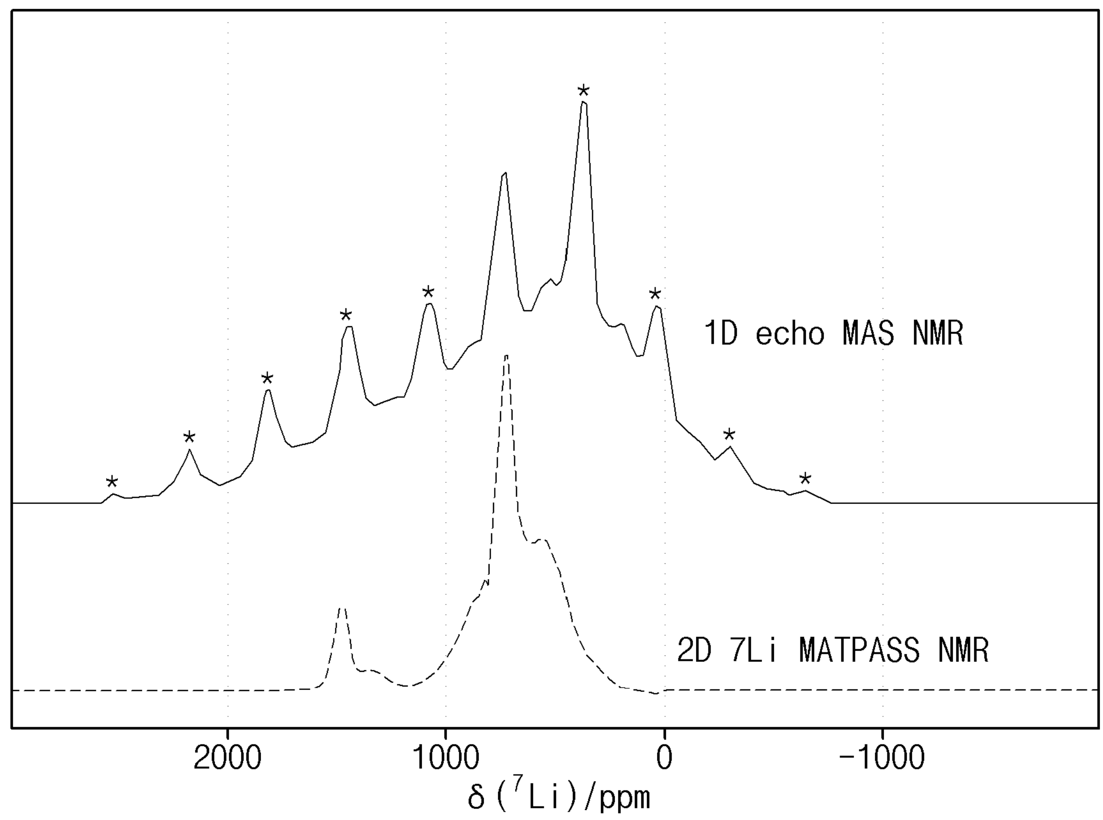

[FIG. 2]

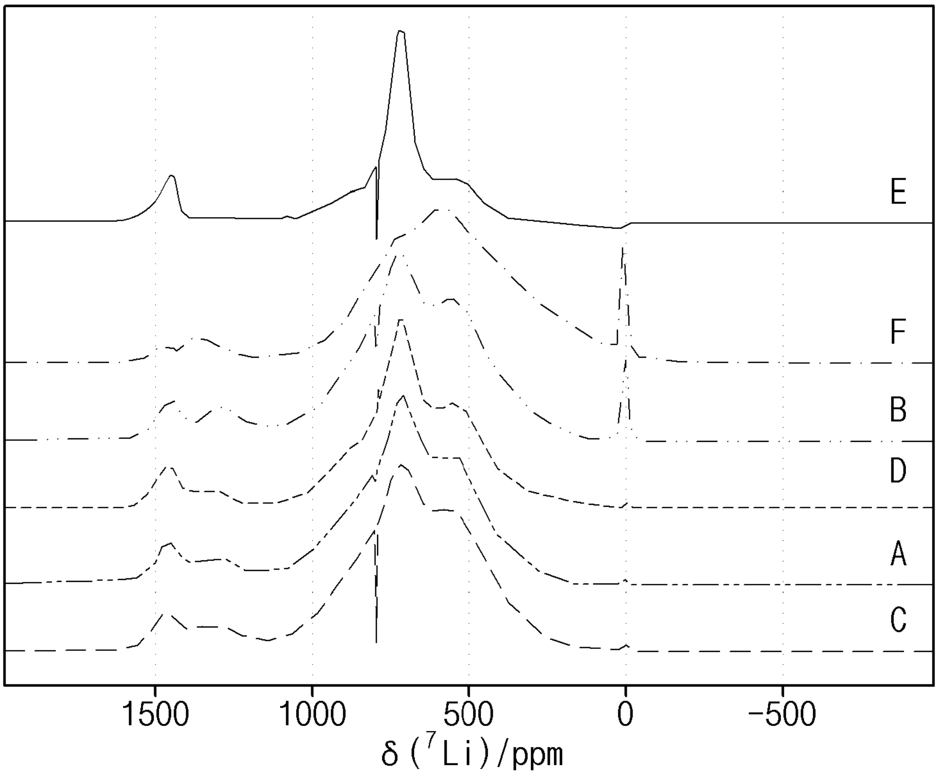

[FIG. 3]

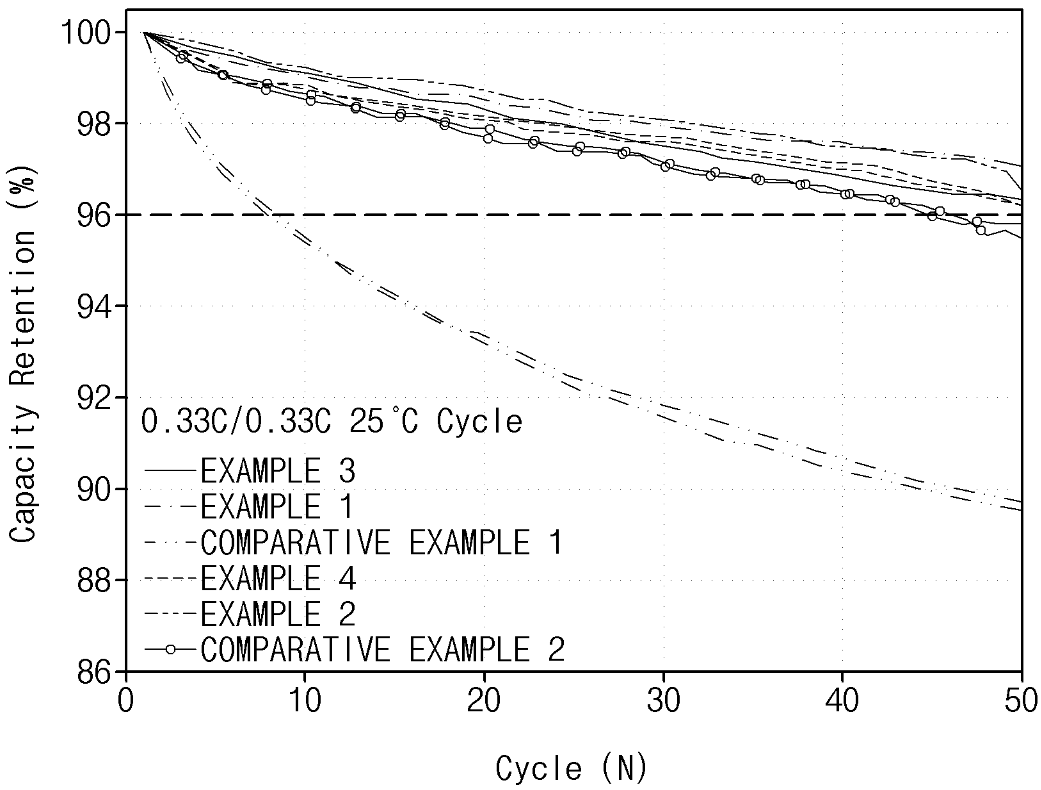
100
98
96
94
92
90
88
86
Capacity Retention (%)
0.33C/0.33C 25°C Cycle
EXAMPLE 3
EXAMPLE 1
COMPARATIVE EXAMPLE 1
EXAMPLE 4
EXAMPLE 2
COMPARATIVE EXAMPLE 2
0
10
20
30
40
50
Cycle (N)

[FIG. 4]

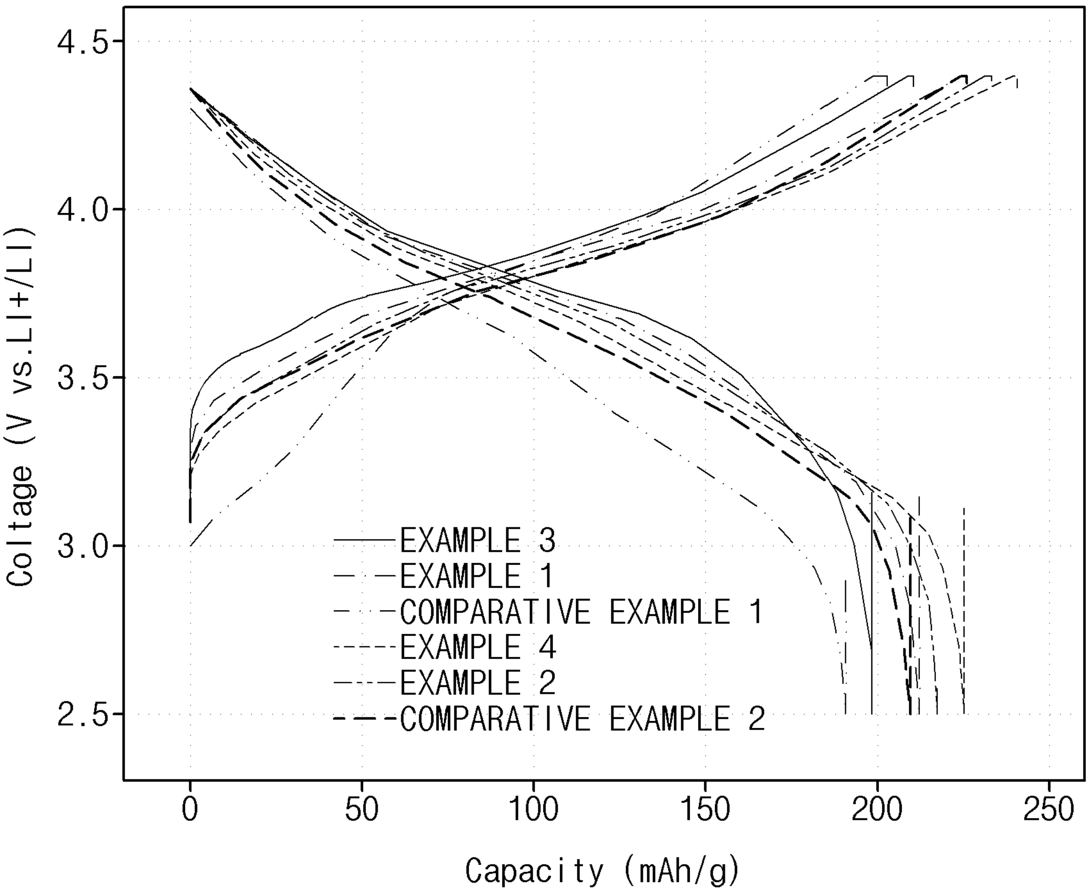
4.5
4.0
3.5
3.0
2.5
Coltage (V vs.LI+/LI)
0
50
100
150
200
250
Capacity (mAh/g)
EXAMPLE 3
EXAMPLE 1
COMPARATIVE EXAMPLE 1
EXAMPLE 4
EXAMPLE 2
COMPARATIVE EXAMPLE 2

[FIG. 5]

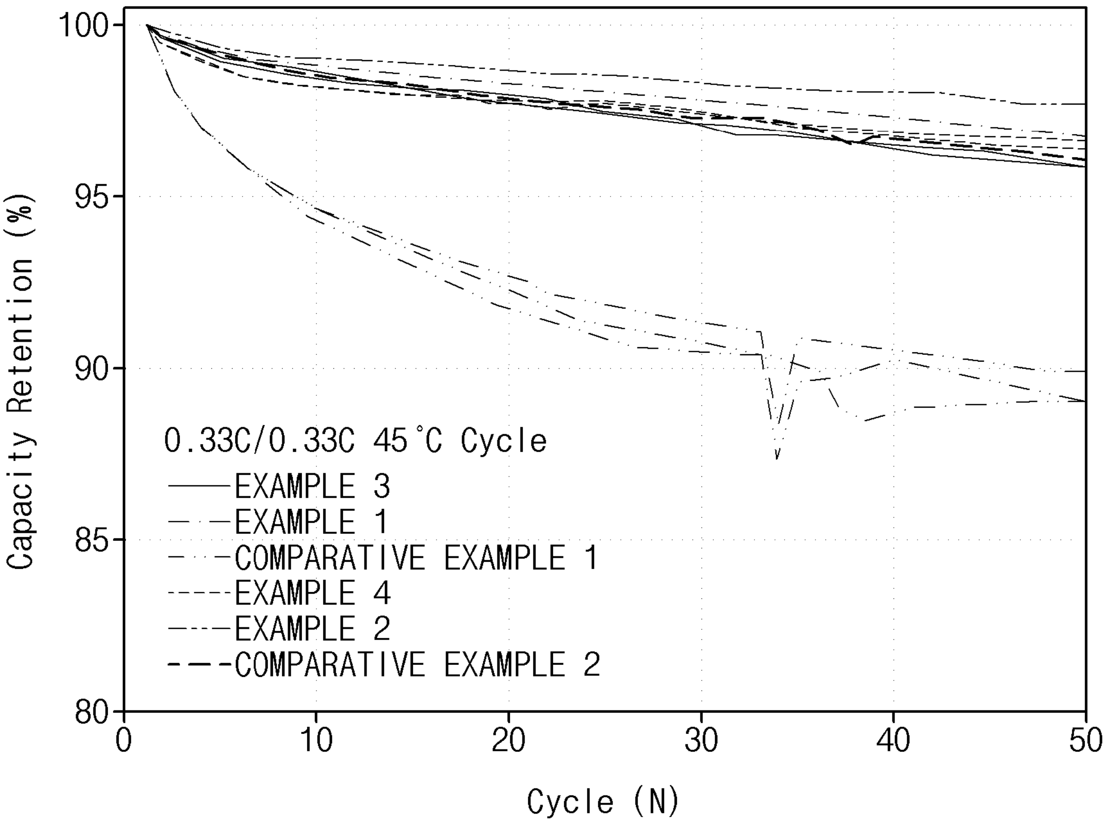
0.33C/0.33C 45˚C Cycle
EXAMPLE 3
EXAMPLE 1
COMPARATIVE EXAMPLE 1
EXAMPLE 4
EXAMPLE 2
COMPARATIVE EXAMPLE 2
Capacity Retention (%)
Cycle (N)
100
95
90
85
80
0
10
20
30
40
50

**INTERNATIONAL SEARCH REPORT**

International application No.
**PCT/KR2023/016101**

**A. CLASSIFICATION OF SUBJECT MATTER**

**H01M 4/505**(2010.01)i; **H01M 4/525**(2010.01)i; **H01M 4/131**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/505(2010.01); C01G 53/00(2006.01); H01M 10/052(2010.01); H01M 4/131(2010.01); H01M 4/36(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 과리튬 망간계 산화물(li-rich manganese oxide), 리튬이차전지 (lithium secondary battery), 리튬층(lithium layer), 전이금속층(transition metal layer)

**C. DOCUMENTS CONSIDERED TO BE RELEVANT**

| Category* | Citation of document, with indication, where appropriate, of the relevant passages | Relevant to claim No. |
|---|---|---|
| A | KR 10-2189056 B1 (POSTECH RESEARCH AND BUSINESS DEVELOPMENT FOUNDATION) 10 December 2020 (2020-12-10)<br>See paragraphs [0083] and [0126]-[0127]; and claim 1. | 1-9 |
| A | KR 10-2019-0046617 A (LG CHEM, LTD.) 07 May 2019 (2019-05-07)<br>See entire document. | 1-9 |
| A | KR 10-2016-0105348 A (LG CHEM, LTD.) 06 September 2016 (2016-09-06)<br>See entire document. | 1-9 |
| A | KR 10-2020-0061234 A (SAMSUNG ELECTRONICS CO., LTD. et al.) 02 June 2020 (2020-06-02)<br>See entire document. | 1-9 |
| A | WO 2019-132568 A1 (POSTECH ACADEMY-INDUSTRY FOUNDATION) 04 July 2019 (2019-07-04)<br>See entire document. | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 January 2024** | **26 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/016101**

| Patent document cited in search report | Publication date (day/month/year) | Patent family member(s) | Publication date (day/month/year) |
|---|---|---|---|
| KR 10-2189056 B1 | 10 December 2020 | KR 10-2019-0109285 A | 25 September 2019 |
| | | US 2021-0257613 A1 | 19 August 2021 |
| | | WO 2019-177394 A1 | 19 September 2019 |
| KR 10-2019-0046617 A | 07 May 2019 | CN 110383541 A | 25 October 2019 |
| | | CN 110383541 B | 13 May 2022 |
| | | EP 3576194 A1 | 04 December 2019 |
| | | EP 3576194 A4 | 15 April 2020 |
| | | JP 2020-510973 A | 09 April 2020 |
| | | JP 7041802 B2 | 25 March 2022 |
| | | KR 10-2500085 B1 | 15 February 2023 |
| | | US 11258054 B2 | 22 February 2022 |
| | | US 2020-0083522 A1 | 12 March 2020 |
| KR 10-2016-0105348 A | 06 September 2016 | CN 107210440 A | 26 September 2017 |
| | | WO 2016-137287 A1 | 01 September 2016 |
| KR 10-2020-0061234 A | 02 June 2020 | CN 111224095 A | 02 June 2020 |
| | | US 11362330 B2 | 14 June 2022 |
| | | US 2020-0168906 A1 | 28 May 2020 |
| | | US 2022-0278320 A1 | 01 September 2022 |
| WO 2019-132568 A1 | 04 July 2019 | KR 10-2019-0081798 A | 09 July 2019 |
| | | KR 10-2116005 B1 | 28 May 2020 |
| | | US 2020-0321610 A1 | 08 October 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220134434